(19) **Europäisches Patentamt European Patent Office Office européen des brevets**

(11) **EP 4 699 938 A1**

(12) **EUROPEAN PATENT APPLICATION**
published in accordance with Art. 153(4) EPC

(43) Date of publication:
25.02.2026 Bulletin 2026/09

(21) Application number: 24908380.9

(22) Date of filing: 20.12.2024

(51) International Patent Classification (IPC):
*B64D 31/16* (2024.01)    *B64D 27/357* (2024.01)
*B64D 27/34* (2024.01)    *H02J 7/00* (2026.01)
*B60L 58/10* (2019.01)    *H01M 4/38* (2006.01)
*H01M 4/587* (2010.01)    *H01M 4/36* (2006.01)
*H01M 4/525* (2010.01)    *H01M 4/505* (2010.01)

(52) Cooperative Patent Classification (CPC):
B60L 58/10; B64D 27/34; B64D 27/357;
B64D 31/16; H01M 4/36; H01M 4/38; H01M 4/505;
H01M 4/525; H01M 4/587; H02J 7/00; Y02E 60/10

(86) International application number:
PCT/KR2024/097187

(87) International publication number:
WO 2025/136076 (26.06.2025 Gazette 2025/26)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 20.12.2023  KR 20230187755
19.12.2024  KR 20240191908

(71) Applicant: **LG Energy Solution, Ltd.
Seoul 07335 (KR)**

(72) Inventors:
• **MOK, Eun Kyung
Daejeon 34122 (KR)**
• **CHANG, Won Seok
Daejeon 34122 (KR)**
• **SONG, Eun Ho
Daejeon 34122 (KR)**

(74) Representative: **Hoffmann Eitle
Patent- und Rechtsanwälte PartmbB
Arabellastraße 30
81925 München (DE)**

(54) **BATTERY SYSTEM FOR TRANSPORTATION MEANS AND METHOD FOR CONTROLLING BATTERY SYSTEM FOR TRANSPORTATION MEANS**

(57)    The present invention relates to a battery system for a transportation means, and the battery system comprises a secondary battery and a battery management device, wherein: the secondary battery includes a positive electrode including a positive electrode active material, a negative electrode including a negative electrode active material, a separator, and an electrolyte, and the negative electrode active material includes a silicon-based active material and a carbon-based active material; and the battery management device comprises a diagnosis unit and a control unit, the diagnosis unit diagnoses a normal operation situation or an abnormal operation situation of the transportation means, and the control unit controls the battery system to charge and discharge the secondary battery in a first operation mode when the diagnosis unit diagnoses the normal operation situation, and to charge and discharge the secondary battery in a second operation mode when the diagnosis unit diagnoses the abnormal operation situation. The battery system for a transportation means according to the present invention, while having excellent lifespan performance, is capable of exhibiting high output for an extended period of time at diagnosis of an abnormal operation situation, thereby enabling stable stopping or easy emergency landing of the transportation means.

Processed by Luminess, 75001 PARIS (FR)

**Description**

**TECHNICAL FIELD**

The present invention relates to a battery system for means of transportation and a method of controlling the battery system for means of transportation.

**BACKGROUND ART**

In recent years, as the application areas of secondary batteries have rapidly expanded to include not only power supply for electronic devices such as electric, electronic, communication, and computer devices, but also power storage and supply for large-area devices such as a power storage device, vehicle, and air mobilities, the demand for high-capacity, high-output, and high-stability secondary batteries is increasing.

In particular, means of transportation such as a vehicle, train, airplane, and the like, has to move along set routes, and driving conditions of the battery system may need to be adjusted depending on various situations. For example, in the case where emergency braking is required due to an abnormal situation in a vehicle or train, or in a case where an emergency landing is considered due to an abnormal operating situation, defect, or the like, of an air mobility, the battery system is required to produce high output and, at the same time, to generate a high capacity to ensure a braking distance or a driving distance for emergency landing. Meanwhile, satisfaction of the requirement for improved lifetime performance for general normal driving situations, for example, periodic flights of air mobility, is also essential.

Meanwhile, the use of lithium secondary batteries using lithium ions as a medium is being considered as secondary batteries. In general, a lithium secondary battery includes a positive electrode including a positive electrode active material, a negative electrode including a negative electrode active material, an electrolyte that serves as a medium for transferring lithium ions, and a separator. In this case, carbon-based active materials, silicon-based active materials, or the like may be used as negative electrode active materials. In addition, as positive electrode active materials, lithium transition metal oxides such as lithium cobalt oxide ($LiCoO_2$), lithium nickel oxide ($LiNiO_2$), lithium nickel-cobalt-manganese composite transition metal oxides, and the like, may be used.

In this case, when applying the battery system to means of transportation such as a vehicle, train, air mobility, and the like, the high output, high energy density, and excellent life performance are required. In particular, in the case of sudden braking of a vehicle or train or emergency landing of air mobility, high output is required to be produced for a long period of time for stable stop or landing. In this regard, carbon-based active materials are mainly considered as negative electrode active materials from the perspective of high life performance, but the carbon-based active materials have difficulty in producing the output required in the event of stopping or emergency landing. Meanwhile, a method of applying a silicon-based active material having a higher capacity than the carbon-based active material may be considered, but the silicon-based active material has problems in that it does not meet the requirements from the perspective of life performance, such as severe volume expansion and shrinkage due to lithium insertion/de-insertion, resulting in breakage of a solid electrolyte interphase (SEI) film, aggravation of electrolyte side reactions, or the like.

Accordingly, there is an urgent need to develop a battery system capable of producing high output and high energy for a long period of time, and at the same time, also having excellent life performance in the event of stopping or emergency landing due to an abnormal situation of means of transportation.

**DISCLOSURE OF THE INVENTION**

**TECHNICAL PROBLEM**

The present invention is directed to providing a battery system for means of transportation capable of producing high output and high energy for a long period of time when the means of transportation stops or makes an emergency landing due to an abnormal situation.

The present invention is also directed to providing a method of controlling a battery system for means of transportation capable of producing high output and high energy for a long period of time when the means of transportation stops or makes an emergency landing due to an abnormal situation.

**TECHNICAL SOLUTION**

[1] The present invention provides a battery system for means of transportation, in which the battery system for means of transportation includes a secondary battery and a battery management system, the secondary battery includes a positive electrode including a positive electrode active material, a negative electrode including a negative electrode active material, a separator, and an electrolyte, the negative electrode active material includes a silicon-based active material and a carbon-based active material, the battery management system includes a diagnostic unit and a control unit, the diagnostic unit diagnoses a normal operating situation or an abnormal operating situation of the means of transportation, the control unit controls the battery system to charge and discharge the secondary battery in a first driving mode when the diagnostic unit diagnoses the normal operating situation, and to charge and discharge the secondary battery in a second driving mode when the diagnostic unit diagnoses the abnormal operating situation, in the first driving mode, the battery system is controlled to charge and discharge the secondary battery for one cycle or more in a first driving voltage range $V_{1a}$ to $V_{1b}$, in the first driving voltage range, an upper limit $V_{1b}$ is a value determined from 4.1 V to 4.6 V, and a lower limit $V_{1a}$ is a value determined from 2.8 V or more to less than $V_{1b}$, in the second driving mode, the battery system is controlled to charge and discharge the secondary battery for one cycle or more in a second driving voltage range $V_{2a}$ to $V_{2b}$, and in the second driving voltage range, an upper limit $V_{2b}$ is a value determined from 4.1 V to 4.6 V, and a lower limit $V_{2a}$ is a value determined below 2.8 V.

[2] According to the [1], the present invention provides the battery system for means of transportation, in which the silicon-based active material includes at least one silicon-based core particle selected from the group consisting of silicon (Si), silicon oxide ($SiO_x$, $0 < x < 2$), silicon-carbon composite, and silicon-metal alloy.

[3] According to one or more of the [1] and [2], the present invention provides the battery system for means of transportation, in which the silicon-based core particle is made of the silicon-carbon composite.

[4] According to one or more of the [1] to [3], the present invention provides the battery system for means of transportation, in which the silicon-based active material further includes a carbon coating layer positioned on the silicon-based core particle.

[5] According to one or more of the [1] to [4], the present invention provides the battery system for means of transportation, in which the carbon-based active material includes at least one selected from the group consisting of graphite, hard carbon, soft carbon, carbon black, graphene, and fibrous carbon.

[6] According to one or more of the [1] to [5], the present invention provides the battery system for means of transportation, in which a weight ratio of the silicon-based active material and the carbon-based active material is 1:99 to 40:60.

[7] According to one or more of the [1] to [6], the present invention provides the battery system for means of transportation, in which the positive electrode active material includes lithium nickel-based oxide.

[8] According to one or more of the [1] to [7], the present invention provides the battery system for means of transportation, in which the lithium nickel-based oxide is a compound represented by the following Chemical Formula 1.

[Chemical Formula 1] $\quad\quad Li_{a1}Ni_{b1}Co_{c1}M^1_{d1}M^2_{e1}O_2$

in the Chemical Formula 1, $M^1$ is Mn, Al or a combination thereof, $M^2$ is at least one selected from the group consisting of Zr, W, Y, Ba, Ca, Ti, Mg, Ta and Nb, a1, b1, c1, d1 and e1 are each independently atomic fractions of elements, and $0.8 \le a1 \le 1.3$, $0.8 \le b1 < 1$, $0 < c1 < 0.2$, $0 < d1 < 0.2$, $0 \le e1 \le 0.1$, and b1+c1+d1+e1=1.

[9] According to one or more of the [1] to [8], the present invention provides the battery system for means of transportation, in which the lithium nickel-based oxide is in the form of at least one of a single particle consisting of one nodule and a quasi-single particle which is a composite of 30 or fewer nodules.

[10] According to one or more of the [1] to [9], the present invention provides the battery system for means of transportation, in which $V_{1a}$ is a value set from 2.8 V to 3.0 V.

[11] According to one or more of the [1] to [10], the present invention provides the battery system for means of transportation, in which $V_{2a}$ is a value set from 2.4 V to 2.7 V.

[12] According to one or more of the [1] to [11], the present invention provides the battery system for means of transportation, in which a ratio of $V_{2a}$ to $V_{1a}$ is 0.9 or less.

[13] In addition, the present invention provides a control method of a battery system for means of transportation, including providing the battery system including a secondary battery and a battery management system including a diagnostic unit and a control unit, diagnosing a normal operating situation or an abnormal operating situation of the means of transportation in the diagnostic unit, and charging and discharging the secondary battery in a first driving mode through the control unit when the diagnostic unit diagnoses the normal operating situation, and charging and discharging the secondary battery in a second driving mode through the control unit when the diagnostic unit diagnoses the abnormal operating situation, in which the secondary battery includes a positive electrode including a positive electrode active material, a negative electrode including a negative electrode active material, a separator, and an electrolyte, the negative electrode active material includes a silicon-based active material and a carbon-based active material, in the first driving mode, the battery system is controlled to charge and discharge the secondary battery for one cycle or more in a first driving voltage range $V_{1a}$ to $V_{1b}$, in the first driving voltage range, an upper limit

$V_{1b}$ is a value determined from 4.1 V to 4.6 V, and a lower limit $V_{1a}$ is a value determined from 2.8 V or more to less than $V_{1b}$, in the second driving mode, the battery system is controlled to charge and discharge the secondary battery for one cycle or more in a second driving voltage range $V_{2a}$ to $V_{2b}$, and in the second driving voltage range, an upper limit $V_{2b}$ is a value determined from 4.1 V to 4.6 V, and a lower limit $V_{2a}$ is a value determined below 2.8 V.

## ADVANTAGEOUS EFFECTS

According to the present invention, a battery system for means of transportation including a secondary battery and a battery management system and a control method thereof are provided. The battery management system includes a diagnostic unit capable of diagnosing a normal operating situation or an abnormal operating situation of means of transportation such as a vehicle, train, air mobility, or the like, and a control unit capable of adjusting a charge/discharge range of the secondary battery according to the diagnosis of the diagnostic unit. The secondary battery includes a positive electrode including a positive electrode active material and a negative electrode including a silicon-based active material and a carbon-based active material as negative electrode active material. The battery system for means of transportation according to the present invention charges and discharges the secondary battery by setting a lower limit of a driving voltage range to a value of 2.8 V or higher through the diagnosis of the diagnostic unit and a first driving mode of the control unit in a situation where the means of transportation normally operates, and charges and discharges the secondary battery by setting the lower limit of the driving voltage range to a value less than 2.8 V through the diagnosis of the diagnostic unit and a second driving mode of the control unit in a situation where the means of transportation abnormally operates, a situation where an emergency stop is required, or an emergency situation where an emergency landing is required. Since the battery system for means of transportation according to the present invention may increase a high output maintenance time during discharge in the second driving mode by including the silicon-based active material and the carbon-based active material, it is possible to perform a stable sudden stop, emergency landing, and the like.

## MODE FOR CARRYING OUT THE INVENTION

Terms or words used in the present specification and claims should not be restrictively interpreted as ordinary meanings or dictionary-based meanings, but should be interpreted as meanings and concepts conforming to the technical aspects of the present invention on the basis of the principle that inventors are allowed to properly define concepts of terms to describe his or her invention in the best ways.

In the present specification, it will be further understood that the terms "comprise," "include," and/or "have" as used in the present specification, specify the presence or addition of stated features, numbers, steps, elements, or combinations thereof, but do not preclude the presence or addition of one or more other features, numbers, steps, elements, or combinations thereof.

In the present invention, a "single particle" is a particle composed of one single nodule. In the present invention, "quasi-single particle" means a composite particle formed of 30 or fewer nodules.

In the present invention, "nodule" means a particle unit body constituting a single particle and a quasi-single particle, and the nodule may be a single crystal lacking a crystalline grain boundary, or a polycrystal in which no grain boundary exists in appearance when observed at a field of view of 5,000 times to 20,000 times using a scanning electron microscope (SEM). An average particle diameter of the nodules may be measured as the arithmetic mean of particle diameters of each nodule measured using the scanning electron microscope (SEM).

In the present invention, a "secondary particle" means a particle formed by the aggregation of tens to hundreds of primary particles. More specifically, the secondary particle is an aggregate of 40 or more primary particles.

Hereinafter, the present invention will be described in more detail.

### Battery system for means of transportation

The present invention relates to a battery system for means of transportation. The means of transportation may refer to a vehicle, train, and/or air mobility. Specifically, the present invention may relate to a battery system for air mobility. More specifically, the present invention may relate to a battery system for urban air mobility (UAM). The battery system for means of transportation according to the present invention is not only suitable for repeated performance of movement (e.g., takeoff, flight, and landing) along a set route, but also capable of producing high output and high energy in a situation where a sudden stop, emergency landing, or the like, is required, and thus may contribute to improving the safety of air mobility.

Specifically, there is provided a battery system for means of transportation, including a secondary battery and a battery management system, in which the secondary battery includes a positive electrode including a positive electrode active material, a negative electrode including a negative electrode active material, a separator, and an electrolyte, the negative electrode active material includes a silicon-based active material and a carbon-based active material, the battery management system includes a diagnostic unit and a control unit, the diagnostic unit diagnoses a normal operating situation or an abnormal operating situation of the means of transportation, the control unit controls the battery system to charge and discharge the secondary battery in a first driving mode when the diagnostic unit diagnoses the normal operating situation, and to charge and discharge the secondary battery in a second driving mode when the diagnostic unit diagnoses the abnormal operating situation, in the first driving mode, the battery system is controlled to charge and discharge the secondary battery for one cycle or more in a first driving voltage range $V_{1a}$ to $V_{1b}$, in the first driving voltage range, an upper limit $V_{1b}$ is a value determined from 4.1 V to 4.6 V, and a lower limit $V_{1a}$ is a value determined from 2.8 V or more to less than $V_{1b}$, in the second driving mode, the battery system is controlled to charge and discharge the secondary battery for one cycle or more in a second driving voltage range $V_{2a}$ to $V_{2b}$, and in the second driving voltage range, an upper limit $V_{2b}$ is a value determined from 4.1 V to 4.6 V, and a lower limit $V_{2a}$ is a value determined below 2.8 V.

According to the present invention, a battery system for means of transportation including a secondary battery and a battery management system and a method of controlling the same are provided. The battery management system includes a diagnostic unit capable of diagnosing a normal operating situation or an abnormal operating situation of the means of transportation, and a control unit capable of adjusting a charge/discharge range of the secondary battery according to the diagnosis of the diagnostic unit. The secondary battery includes a positive electrode including a positive electrode active material and a negative electrode including a silicon-based active material and a carbon-based active material as negative electrode active material. The battery system for means of transportation according to the present invention charges and discharges the secondary battery by setting a lower limit of a driving voltage range to a value of 2.8 V or higher through the diagnosis of the diagnostic unit and a first driving mode of the control unit in a situation where the means of transportation normally operates, and charges and discharges the secondary battery by setting the lower limit of the driving voltage range to a value less than 2.8 V through the diagnosis of the diagnostic unit and a second driving mode of the control unit in a situation where the means of transportation abnormally operates, a situation where an emergency stop is required, or an emergency situation where an emergency landing is required. Since the battery system for means of transportation according to the present invention may increase a high output maintenance time during discharge in the second driving mode by including the silicon-based active material and the carbon-based active material, it is possible to perform a stable sudden stop, emergency landing, and the like.

### (1) Secondary battery

The battery system according to the present invention includes a secondary battery. The secondary battery may specifically be a lithium secondary battery.

The secondary battery includes a positive electrode, a negative electrode, a separator, and an electrolyte. More specifically, the secondary battery may include a positive electrode, a negative electrode opposite to the positive electrode, a separator interposed between the positive electrode and the negative electrode, and an electrolyte. The lithium secondary battery may be manufactured by housing an electrode assembly including the positive electrode; the negative electrode opposite to the positive electrode; and a separator interposed between the positive electrode and the negative electrode in a battery case and then injecting the electrolyte.

1) Positive electrode

The positive electrode includes a positive electrode active material.

The positive electrode active material is a compound capable of reversible intercalation and de-intercalation, and is not particularly limited as long as a material is a positive electrode active material used in the related art. Specifically, the positive electrode active material may be a layered compound such as lithium cobalt oxide ($LiCoO_2$), lithium nickel oxide ($LiNiO_2$), or the like, or a compound substituted with one or more transition metals; lithium iron oxide such as $LiFe_3O_4$ or the like; lithium iron phosphate such as $LiFePO_4$ or the like; lithium manganese oxide such as the chemical formula $Li_{1+c1}Mn_{2-c1}O_4$ ($0 \leq c1 \leq 0.33$), $LiMnO_3$, $LiMn_2O_3$, $LiMnO_2$, or the like; lithium copper oxide ($Li_2CuO_2$); vanadium oxide such as $LiV_3O_8$, $V_2O_5$, $Cu_2V_2O_7$, or the like; Ni-site type lithium nickel oxide represented by the chemical formula $LiNi_{1-c2}Mc_2O_2$ (where, M is at least one selected from the group consisting of Co, Mn, Al, Cu, Fe, Mg, B, and Ga, and satisfies $0.01 \leq c2 \leq 0.3$); lithium manganese composite oxide represented by the chemical formula $LiMn_{2-c3}Mc_3O_2$ (where, M is at least one selected from the group consisting of Co, Ni, Fe, Cr, Zn, and Ta, and satisfies $0.01 \leq c3 \leq 0.1$) or $Li_2Mn_3MO_8$ (where, M is at least one selected from the group consisting of Fe, Co, Ni, Cu, and Zn); or the like, but is not limited thereto. The positive electrode may be a Li-metal positive electrode.

Specifically, the positive electrode active material may include lithium nickel-based oxide.

More specifically, the lithium nickel-based oxide may include a compound represented by the following chemical formula 1.

[Chemical Formula 1]          $Li_{a1}Ni_{b1}Co_{c1}M^1_{d1}M^2_{e1}O_2$

In the Chemical Formula 1, $M^1$ is Mn, Al, or a combination thereof, $M^2$ is at least one selected from the group consisting of Zr, W, Y, Ba, Ca, Ti, Mg, Ta, and Nb, a1, b1, c1, d1, and e1 are each independently atomic fractions of elements, $0.8 \leq a1 \leq 1.3$, $0.8 \leq b1 < 1$, $0 < c1 < 0.2$, $0 < d1 < 0.2$, $0 \leq e1 \leq 0.1$, and $b1 + c1 + d1 + e1 = 1$.

The $M^1$ may be Mn, Al, or a combination thereof, and preferably may be Mn or Mn and Al.

The $M^2$ is at least one selected from the group consisting of Zr, W, Y, Ba, Ca, Ti, Mg, Ta, and Nb, preferably, may be at least one selected from the group consisting of Zr, Y, Mg, and Ti, and more preferably, may be Zr, Y, or a combination thereof. The $M^2$ element is not essential, but when included in an appropriate amount, the $M^2$ element may promote grain growth during sintering or play a role in improving crystal structure stability.

The a1 represents a molar ratio of lithium in the lithium transition metal oxide, and may be $0.8 \leq a1 \leq 1.3$, $0.9 \leq a1 \leq 1.3$, or $1.0 \leq a1 \leq 1.2$. When the molar ratio of lithium satisfies the range, the crystal structure of the lithium transition metal oxide may be stably formed.

The b1 represents a molar ratio of nickel among all metals excluding lithium in the lithium transition metal oxide, and may be $0.8 \leq b1 < 1$, $0.82 \leq b1 < 1$, $0.83 \leq b1 < 1$, or $0.85 \leq b1 < 1$. When the molar ratio of nickel satisfies the range, high energy density is exhibited, and thus high capacity may be implemented.

The c1 represents a molar ratio of cobalt among all metals excluding lithium in the lithium transition metal oxide, and may be $0 < c1 < 0.2$, $0 < c1 < 0.18$, or $0.01 \leq c1 \leq 0.17$. When the molar ratio of cobalt satisfies the range, good resistance characteristics and output characteristics may be implemented.

The d1 represents a molar ratio of the $M^1$ element among all metals excluding lithium in the lithium transition metal oxide, and may be $0 < d1 < 0.2$, $0 < d1 < 0.18$, or $0.01 \leq d1 \leq 0.17$. When the molar ratio of the $M^1$ element satisfies the range, the structural stability of the positive electrode active material is excellent.

The e1 represents the molar ratio of the $M^2$ element among all metals excluding lithium in the lithium transition metal oxide, and may be $0 \leq e1 \leq 0.1$, or $0 \leq e1 \leq 0.05$.

The lithium nickel-based oxide may be in the form of at least one of a single particle consisting of one nodule and a quasi-single particle which is a composite of 30 or fewer nodules; a secondary particle; or a mixture thereof.

Specifically, the lithium nickel-based oxide may be in the form of at least one of a single particle consisting of one nodule and a quasi-single particle which is a composite of 30 or fewer nodules. In this case, since the rolling process during the manufacture of the positive electrode or the breakage of particles during charging and discharging of the positive electrode may be prevented, problems such as gas generation due to electrolyte side reactions, deterioration of the active material, the reduction in life performance, and the like, may be prevented. In addition, since the lithium nickel-based oxide having the single particle or quasi-single particle form has the advantage of allowing rapid reactions on all surfaces of the particles, making the lithium nickel oxide advantageous for the battery system requiring high-power operation.

When the lithium nickel-based oxide has at least one of the single particle form and the quasi-single particle form that have been described above, an average particle diameter $D_{50}$ of the lithium nickel-based oxide may be 10 $\mu$m or less, 8 $\mu$m or less, 7 $\mu$m or less, or 5 $\mu$m or less, for example, 0.5 $\mu$m to 10 $\mu$m, preferably 1 $\mu$m to 8 $\mu$m, more preferably 2 $\mu$m to 7 $\mu$m, and even more preferably 3 $\mu$m to 5 $\mu$m. When the average particle diameter $D_{50}$ of the positive electrode active material satisfies the range, the increase in resistance may be minimized. Specifically, since the lithium nickel-based oxide having the single particle form and/or quasi-single particle form may have fewer interfaces between primary particles that serve as diffusion paths for lithium ions within the particles, by adjusting the $D_{50}$ of the lithium nickel-based oxide within the range, the diffusion distance of lithium ions within the particles may be minimized, thereby suppressing the increase in resistance and improving the output performance.

The positive electrode may include a positive electrode current collector and a positive electrode active material layer disposed on at least one surface of the positive electrode current collector. In this case, the positive electrode active material may be included in the positive electrode active material layer.

The positive electrode current collector is not particularly limited as long as a material has high conductivity without causing chemical changes in the battery. Specifically, the positive electrode current collector may include at least one selected from the group consisting of copper, stainless steel, aluminum, nickel, titanium, calcined carbon, and an aluminum-cadmium alloy, preferably aluminum.

The positive electrode current collector may typically have a thickness of 3 to 500 $\mu$m.

The positive electrode current collector may also form fine unevenness on the surface to strengthen a bonding strength of the positive electrode active material. For example, the positive electrode current collector may be used in various forms such as a film, a sheet, a foil, a net, a porous body, a foam, a non-woven fabric, or the like.

The positive electrode active material layer may be disposed on at least one surface of the positive electrode current collector. Specifically, the positive electrode active material layer may be disposed on one surface or both surfaces of the positive electrode current collector.

The positive electrode active material layer may include the-described positive electrode active material.

The positive electrode active material may be included in the positive electrode active material layer in an amount of 80 wt% to 99 wt%, specifically 90 wt% to 98 wt%.

The positive electrode active material layer may optionally further include a binder and/or a conductive material together with the positive electrode active material described above.

The binder is a component that assists in binding of the active material and the conductive material and the binding to the current collector, and specifically, may include at least one selected from the group consisting of polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene terpolymer (EPDM), sulfonated EPDM, styrene-butadiene rubber, and fluororubber, preferably polyvinylidene fluoride.

The binder may be included in the positive electrode active material layer in an amount of 1 wt% to 20 wt%, preferably 1.2 wt% to 10 wt%, in terms of sufficiently ensuring a binding force between components such as the positive electrode active material or the like.

The conductive material may be used to assist and improve conductivity in the secondary battery, and is not particularly limited as long as a material has conductivity without causing chemical changes. Specifically, the positive conductive material may include at least one selected from the group consisting of graphite such as natural graphite, artificial graphite, or the like; carbon black such as carbon black, acetylene black, Ketjen black, channel black, paneth black, lamp black, thermal black, or the like; a conductive fiber such as a carbon fiber, metal fiber, or the like; a conductive tube such as a carbon nanotube or the like; fluorocarbon; metal powder such as aluminum powder, nickel powder, or the like; a conductive whisker such as zinc oxide, potassium titanate, or the like; conductive metal oxide such as titanium oxide or the like; and a polyphenylene derivative, and preferably, may include carbon nanotubes in terms of improved conductivity.

The conductive material may be included in the positive electrode active material layer in an amount of 1 wt% to 20 wt%, preferably 1.2 wt% to 10 wt%, in terms of sufficiently ensuring electrical conductivity.

The thickness of the positive electrode active material layer may be 5 $\mu$m to 500 $\mu$m, preferably 20 $\mu$m to 200 $\mu$m.

The positive electrode may be manufactured by coating a positive electrode slurry including the positive electrode active material and optionally a binder, a conductive material, and a solvent for forming the positive electrode slurry (e.g., NMP) on the positive electrode current collector, and then drying and rolling.

2) Negative electrode

The negative electrode may be opposed to the positive electrode.

The negative electrode includes a negative electrode active material.

The negative electrode active material includes a silicon-based active material and a carbon-based active material.

In addition, the silicon-based active material is a material having a larger irreversible capacity than the carbon-based active material, and thus a negative electrode potential first rises at an end of discharge, so that a lower end potential of the positive electrode is not used, and a phenomenon that an unused low potential section of the positive electrode increases occurs. The battery system according to the present invention may include a silicon-based active material in the negative electrode active material, thereby allowing the silicon-based active material having a large irreversible capacity to produce high output without following a lower end potential of the positive electrode at a voltage lower limit $V_{2a}$ of the positive electrode in the second driving mode. Therefore, according to the present invention, when an abnormal operating situation of means of transportation requiring a sudden stop, emergency landing, or the like, occurs, high output may be maintained for a long period of time at a lower end of a remaining capacity state of charge (SOC) of the negative electrode through the characteristics described above. When only the carbon-based active material is used as the negative electrode active material, since the potential of the negative electrode at a lower end of discharge of the carbon-based active material having low irreversible capacity does not rise until a lower end potential of the positive electrode is used, the voltage of the positive electrode rapidly changes and the entire voltage range of the section having very high resistance is used, which has a detrimental effect on the use of high output.

Meanwhile, since there is concern that the silicon-based active material may have a detrimental effect on life performance, such as volume expansion during charge and discharge or the like, the negative electrode active material according to the present invention uses the carbon-based active material that exhibits excellent life performance together with the silicon-based active material. That is, the battery system according to the present invention adjusts the voltage range in each driving mode so that the stable battery system driving ability of the carbon-based active material is mainly exhibited in a cruising situation of the means of transportation (first driving mode) and the high-output producing effect of the silicon-based active material is exerted in an emergency situation (second driving mode).

The silicon-based active material may include at least one silicon-based core particle selected from the group consisting of silicon (Si), silicon oxide ($SiO_x$, $0 < x < 2$), a silicon-carbon composite, and a silicon-metal alloy. More specifically, the silicon-based core particles may consists of a silicon-carbon composite, which is desirable in terms of exhibiting high theoretical capacity and high energy density, and the effect of producing the high output and high energy in an emergency situation by the diagnosis and control of the battery management system to be described below may be improved.

The silicon-based active material may further include a metal doped into the silicon-based core particles. The metal may be introduced to reduce the irreversibility of the silicon-based core particles and improve efficiency.

The metal may include at least one metal selected from the group consisting of Li, Mg, Ca, and Al. Specifically, in terms of being able to implement the volume expansion control, damage prevention, and initial efficiency improvement effect of the silicon-based active material at an excellent level, the metal may include at least one metal selected from the group consisting of Li and Mg, more specifically, Mg. The weight of the metal may be included in the silicon-based active material in an amount of 1 wt% to 30 wt%, specifically 5 wt% to 20 wt%, but is not particularly limited thereto.

The silicon-based active material may further include a carbon coating layer disposed on the surface. The carbon coating layer may function as a protective layer that suppresses volume expansion of the silicon-based active material and prevents side reactions with the electrolyte. The carbon coating layer may be disposed, for example, on the silicon-based core particle. The carbon coating layer may be included in the silicon-based active material in an amount of 0.1 wt% to 10 wt%, preferably 3 wt% to 7 wt%.

The carbon coating layer may be an amorphous carbon coating layer. Specifically, the carbon coating layer may be formed by a chemical vapor deposition (CVD) method using at least one hydrocarbon gas selected from the group consisting of methane, ethane, and acetylene.

The average particle diameter $D_{50}$ of the silicon-based active material may be 0.1 $\mu$m to 15 $\mu$m, more preferably 0.1 $\mu$m to 10 $\mu$m, in terms of ensuring the structural stability of the active material during charge and discharge, preventing the problem that the level of volume expansion/contraction increases as the particle diameter becomes excessively large, and preventing the problem that the initial efficiency decreases as the particle diameter becomes excessively low.

The carbon-based active material may include at least one selected from the group consisting of graphite, hard carbon, soft carbon, carbon black, graphene, and fibrous carbon, and may specifically include graphite. The graphite may be artificial graphite, natural graphite, or a mixture thereof.

The average particle diameter $D_{50}$ of the carbon-based active material may be 10 $\mu$m to 30 $\mu$m, preferably 15 $\mu$m to 25 $\mu$m, in terms of ensuring the structural stability during charge and discharge and reducing side reactions with the electrolyte.

A weight ratio of the silicon-based active material and the carbon-based active material may be 1:99 to 40:60, specifically 1:99 to 20:80, more specifically 3:97 to 15:85, and more specifically 8:92 to 15:85, and the range is desirable in terms of being capable of ensuring the capacity required and improving its life performance during the normal operation of the air mobility while simultaneously producing high output and high energy in an emergency situation.

The negative electrode may include a negative electrode current collector; and a negative electrode active material layer disposed on at least one surface of the negative electrode current collector. In this case, the negative electrode active material may be included in the negative electrode active material layer.

The negative electrode current collector is not particularly limited as long as a material has high conductivity without causing chemical changes in the battery. Specifically, as the negative electrode current collector, copper, stainless steel, aluminum, nickel, titanium, calcined carbon, copper, or stainless steel or the like surface-treated with carbon, nickel, titanium, silver, or the like, or, an aluminum-cadmium alloy, or the like, may be used.

The negative electrode current collector may typically have a thickness of 3 to 500 $\mu$m.

The negative electrode current collector may also form fine unevenness on the surface to strengthen a bonding strength of the negative electrode active material. For example, the negative electrode current collector may be used in various forms such as a film, a sheet, a foil, a net, a porous body, a foam, a non-woven fabric, or the like.

The negative electrode active material layer may be disposed on at least one surface of the negative electrode current collector, specifically, on one surface or both surfaces of the negative electrode current collector.

The negative electrode active material may be included in the negative electrode active material layer in an amount of 60 wt% to 99 wt%, preferably 75 wt% to 95 wt%.

Since the description of other positive electrode active materials has been described above, the description thereof is omitted.

The negative electrode active material layer may further include a binder and/or a conductive material together with the negative electrode active material.

The binder is used to improving the adhesion between the negative electrode active material layer and the negative electrode current collector to improve the performance of the battery, and may include at least one selected from the group consisting of, for example, polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, and a material in which hydrogens thereof are substituted with Li, Na or Ca, or the like, and may also include various copolymers thereof.

The binder may be included in the negative electrode active material layer in an amount of 0.5 wt% to 10 wt%, preferably 1 wt% to 5 wt%.

The conductive material is not particularly limited as long as the material has conductivity without causing chemical changes in the battery, for example, graphite such as natural graphite, artificial graphite, or the like; carbon black such as carbon black, acetylene black, Ketjen black, channel black, paneth black, lamp black, thermal black, or the like; a conductive fiber such as a carbon fiber, metal fiber, or the like; a conductive tube such as a carbon nanotube or the like; fluorocarbon; metal powder such as aluminum powder, nickel powder, or the like; a conductive whisker such as zinc oxide, potassium titanate, or the like; conductive metal oxide such as titanium oxide or the like; a conductive material such as a polyphenylene derivative, or the like may be used.

The conductive material may be included in the negative electrode active material layer in an amount of 0.5 wt% to 10 wt%, preferably 1 wt% to 5 wt%.

The thickness of the negative electrode active material layer may be 10 $\mu$m to 200 $\mu$m, preferably 20 $\mu$m to 150 $\mu$m.

The negative electrode may be manufactured by coating a negative electrode slurry including the negative electrode active material, the binder, the conductive material, and/or a solvent for forming the negative electrode slurry on at least one surface of the negative electrode current collector, and then drying and rolling.

The solvent for forming the negative electrode slurry may include at least one selected from the group consisting of distilled water, N-methyl-2-pyrrolidone (NMP), ethanol, methanol, and isopropyl alcohol, preferably distilled water, in terms of facilitating dispersion of the negative electrode active material, the binder, and/or the conductive material. A solid content of the negative electrode slurry may be 30 wt% to 80 wt%, specifically 40 wt% to 70 wt%.

3) Separator

The separator may be interposed between the positive electrode and the negative electrode.

In addition, as the separator, a typical porous polymer film that has been used as a separator in the related art, for example, a porous polymer film made of a polyolefin polymer such as an ethylene homopolymer, a propylene homopolymer, an ethylene/butene copolymer, an ethylene/hexene copolymer, an ethylene/methacrylate copolymer, and the like, may be used alone or in a stacked manner, or a conventional porous nonwoven fabric, for example, a nonwoven fabric made of high-melting-point glass fiber, polyethylene terephthalate fiber, or the like, may be used, but the separator is not limited thereto. In addition, a coated separator including ceramic components or polymer materials may be used to secure heat resistance or mechanical strength, and may optionally be used in a single-layer or multi-layer structure.

4) Electrolyte

The electrolyte may be a non-aqueous electrolyte.

The electrolyte used in the present invention may include an organic liquid electrolyte, an inorganic liquid electrolyte, a solid polymer electrolyte, a gel-type polymer electrolyte, a solid inorganic electrolyte, a molten inorganic electrolyte, or the like, which may be used in the manufacture of secondary batteries, but is not limited thereto.

Specifically, the electrolyte may include an organic solvent and a lithium salt.

As the lithium salt, any compound may be used without any special restrictions as long as it is a compound that may provide lithium ions used in the lithium secondary battery. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, LiN $(C_2F_5SO_3)_2$, LiN $(C_2F_5SO_2)_2$, LiN $(CF_3SO_2)_2$, LiCl, LiI, or LiB $(C_2O_4)_2$ may be used. It is desirable that the concentration of the lithium salt is used within a range of 0.1 M to 2.0 M. When the concentration of the lithium salt is within the range, since the electrolyte has appropriate conductivity and viscosity, the electrolyte may exhibit excellent electrolyte performance and allow lithium ions to effectively move.

The organic solvent may include at least one selected from linear carbonate, cyclic carbonate, linear ester, cyclic ester, ether, glyme, and nitrile.

The linear carbonate may include at least one selected from the group consisting of dimethyl carbonate (DMC), diethyl carbonate (DEC), dipropyl carbonate, ethylmethyl carbonate (EMC), methylpropyl carbonate, and ethylpropyl carbonate.

The cyclic carbonate may include at least one selected from the group consisting of ethylene carbonate (EC), propylene carbonate (PC), 1,2-butylene carbonate, 2,3-butylene carbonate, 1,2-pentylene carbonate, and 2,3-pentylene carbonate.

Specific examples of the linear ester include methyl acetate, ethyl acetate, propyl acetate, methyl propionate, ethyl propionate, propyl propionate, butyl propionate, and the like, but are not limited thereto.

Specific examples of the cyclic ester include $\gamma$-butyrolactone, $\gamma$-valerolactone, $\gamma$-caprolactone, $\sigma$-valerolactone, $\varepsilon$-caprolactone, and the like, but are not limited thereto.

Specific examples of the ether include dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL), and the like, but are not limited thereto.

Specific examples of the glyme include dimethoxyethane (glyme, DME), diethoxyethane, diglyme, triglyme, tetra-glyme (TEGDME), and the like, but are not limited thereto.

Specific examples of the nitrile include acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, and the like, but are not limited thereto.

The electrolyte may further include an additive together with a lithium salt and an organic solvent.

The additive may include at least one selected from the group consisting of vinylethylene carbonate, propane sultone, lithium tetrafluoro borate ($LiBF_4$), lithium difluoro(oxalato) borate (LiODFB), 1,3,6-hexane tri-cyanide (HTCN), and $NaO_2$ (sodium superoxide), specifically, fluoroethylene carbonate, difluoroethylene carbonate, vinylethylene carbonate, propane sultone, lithium tetrafluoro borate ($LiBF_4$), lithium difluoro(oxalato) borate (LiODFB), 1,3,6-hexane tri-cyanide (HTCN), succinonitrile, 1,4-dicyano-2-butyne, adipionitrile, lithium difluorophosphate ($LiPO_2F_2$), and $NaO_2$ (sodium superoxide).

Other additives may be included in the electrolyte in an amount of 0.1 wt% to 20 wt%, specifically 1 wt% to 10 wt%, but and not limited thereto.

There is no particular limitation on an external shape of the secondary battery of the present invention, but the shape may be a cylindrical shape, a square shape, a pouch shape, a coin shape, or the like, using a can.

A plurality of secondary batteries may be provided. For example, the battery system may include a battery module, and the battery module may include one or more of the secondary batteries.

(2) Battery management system

A battery management system (BMS) may manage and/or control the state and/or operation of the secondary battery.

Specifically, the battery management system may include a diagnostic unit; and a control unit.

The diagnostic unit may diagnose, determine and/or detect a normal operating situation or an abnormal operating situation of the means of transportation. The normal operating situation of the means of transportation may refer to, for example, a situation in which there are no particular problems with air mobility taking off from a departure point, flying to a destination, and landing at the destination, a situation in which a vehicle, train, or the like, may smoothly travels at an intended speed or steering direction, or the like. The abnormal operating situation of the means of transportation may be a situation in which normal operation of the means of transportation is difficult, including, but not limited to, a situation in which the normal operation is no longer possible due to a defect in an air mobility body, a defect in the battery system, bad weather, patient occurrence, or the like, and may refer to a case where measures such as high-speed flight, emergency landing, or the like, are required, a case where a sudden stop is required due to a defect in a vehicle, train, or the like, or other external circumstances, or the like. The diagnosis of the abnormal operating situation of the means of transportation is made by the diagnostic unit receiving and determining a signal according to the abnormal operating situation outside the battery system, or the diagnostic unit detecting or analyzing an abnormal driving of the battery management system, and is not particularly limited thereto.

The control unit may manage and/or control the state and/or operation of the secondary battery, such as the driving voltage range, the range of a state of charge (SOC) during charging and discharging of the secondary battery, and the like.

Specifically, the control unit charges and discharges the secondary battery in a first driving mode when the diagnostic unit diagnoses the normal operating situation.

In the first driving mode, the battery system may be controlled to charge and discharge the secondary battery for one cycle or more in a first driving voltage range $V_{1a}$ to $V_{1b}$. In this case, in the first driving voltage range, an upper limit $V_{1b}$ may be a value determined from 4.1 V to 4.6 V, and a lower limit $V_{1a}$ may be a value determined from 2.8 V or more to less than $V_{1b}$.

The first driving mode may minimize the proportion of use of the silicon-based active material by allowing the secondary battery to be charged and discharged in the first driving voltage range and minimize the degradation of the life performance of the means of transportations in terms of allowing the carbon-based active material to function as the main active material, and thus stable operation may be possible.

In the first driving mode, the upper limit $V_{1b}$ may be a value determined from 4.1 V to 4.6 V, and specifically may be a value determined from 4.1 V to 4.3 V.

In the first driving mode, the lower limit $V_{1a}$ may be a value determined from 2.8 V or more to less than $V_{1b}$, specifically a value determined from 2.8 V to 3.0 V, more specifically a value determined from 2.8 V to 2.9 V.

In the first driving mode, the secondary battery is charged and discharged for one cycle or more in the first driving voltage range. When the number of charge/discharge cycles of the secondary battery is 2 or more, $V_{1a}$ and $V_{1b}$ in each cycle may be the same or different as long as the conditions described above are satisfied.

In addition, the control unit charges and discharges the secondary battery in the second driving mode when the diagnostic unit diagnoses the abnormal operating situation.

In the second driving mode, the battery system may be controlled to charge and discharge the secondary battery for one cycle or more in a second driving voltage range $V_{2a}$ to $V_{2b}$. In this case, in the second driving voltage range, an upper limit $V_{2b}$ may be a value determined from 4.1 V to 4.6 V, and a lower limit $V_{2a}$ may be a value determined below 2.8 V.

The second driving mode allows the secondary battery to be charged and discharged in the second driving voltage range, and allows high output to be generated without following the lower end potential of the positive electrode at the voltage lower limit $V_{2a}$ in the second driving mode due to the high irreversible capacity of the silicon-based active material. Therefore, according to the present invention, when an abnormal operating situation of means of transportation requiring a sudden stop, emergency landing, or the like, occurs, high output may be maintained for a long period of time at a lower end of a remaining capacity state of charge (SOC) of the negative electrode through the characteristics described above.

In the second driving mode, the upper limit $V_{2b}$ may be a value determined from 4.1 V to 4.6 V, and specifically may be a value determined from 4.1 V to 4.3 V.

In the second driving mode, the lower limit $V_{2a}$ may be a value determined below 2.8 V, a value determined below 2.7 V, or a value determined below 2.6 V. The lower limit $V_{2a}$ may be a value determined below 2.8 V, specifically a value determined from 2.0 V to 2.7 V, more specifically a value determined from 2.4 V to 2.7 V, even more specifically a value determined from 2.5 V to 2.7 V, even more specifically a value determined from 2.5 V to 2.6 V.

In the second driving mode, the secondary battery is charged and discharged for one cycle or more in the second driving voltage range. When the number of charge/discharge cycles of the secondary battery is 2 or more, $V_{2a}$ and $V_{2b}$ in each cycle may be the same or different as long as the conditions described above are satisfied.

In the present invention, a ratio of $V_{2a}$ to the $V_{1a}$ may be 0.95 or less, specifically 0.9 or less, and more specifically 0.89 or less.

In the battery system, the first driving mode may be to control the battery system to charge and discharge the secondary battery for one cycle or more so that the remaining capacity of the negative electrode is in a range of $SOC_{1a}$ (unit: %) to $SOC_{1b}$ (unit: %), in addition to the conditions described above. In this case, the $SOC_{1a}$ is a value set according to the following Equation 1, and the $SOC_{1a}$ is a value that exceeds the $SOC_{1a}$ value but is less than or equal to 100%.

$$[\text{Equation 1}]$$

$$\{(C_{Si})/(C_{Si} + C_{Carbon})\} \times 100 \leq SOC_{1a} < 100$$

In Equation 1, $C_{Si}$ is a value obtained by multiplying a theoretical capacity (unit: mAh/g) of the silicon-based active material and a weight (unit: g) of the silicon-based active material included in the negative electrode active material, and $C_{Carbon}$ is a value obtained by multiplying a theoretical capacity (unit: mAh/g) of the carbon-based active material and a weight (unit: g) of the carbon-based active material present in the negative electrode active material.

The residual capacity $SOC_{1a}$ of the negative electrode is a value set by Equation 1, and in this case, is set to the expression "$\{(C_{Si})/(C_{Si} + C_{Carbon})\} \times 100$" or more. As the residual capacity $SOC_{1a}$ of the negative electrode is set by Equation 1, the proportion of use of the silicon-based active material may be minimized in the normal operating situation of the means of transportation, and the carbon-based active material may function as the main negative electrode active material. That is, by minimizing the capacity contribution of the silicon-based active material, which exhibits unfavorable performance compared to the carbon-based active material in terms of life performance, stable flight may be achieved without a decrease in life performance in the normal operating situation of the means of transportation.

More specifically, the $SOC_{1a}$ may be a value set by the following Equation 1-1. For example, Equation 1 may be replaced with the following Equation 1-1.

$$\{(C_{Si})/(C_{Si} + C_{Carbon})\} \times 100 \leq SOC_{1a} < [\{(C_{Si})/(C_{Si} + C_{Carbon})\} \times 100] + x \qquad [\text{Equation 1-1}]$$

In Equation 1-1, x may be 0 to 20, may be 0 to 15, 0 to 10, or may be 0 to 5. The unit of the x may be "%." When the $SOC_{1a}$ is determined in the range, the effect described above may be sufficiently achieved to increase the proportion of use of the carbon-based active material, so that stable driving in the normal operating situation may be achieved.

The $SOC_{1a}$ may be a value that exceeds the $SOC_{1a}$ value but is less than or equal to 100%, for example, may be a value set from 90% to 100%, and as a more specific example, may be 100%.

In the first driving mode, the secondary battery is charged and discharged for one cycle or more so that the remaining capacity of the negative electrode is in the range of $SOC_1$, to $SOC_{1b}$. When the number of charge/discharge cycles of the secondary battery is 2 or more, $SOC_{1a}$ and $SOC_{1a}$ in each cycle may be the same or different as long as the conditions described above are satisfied.

In addition, the second driving mode may be to charge and discharge the secondary battery for one cycle or more so that the remaining capacity of the negative electrode is in a range of $SOC_{2a}$ (unit: %) to $SOC_{2b}$ (unit: %), in addition to the conditions described above. In this way, the $SOC_{2a}$ may be a value equal to or greater than 0% and less than $SOC_{1a}$, and the $SOC_{2b}$ may be a value greater than $SOC_{2a}$ and less than or equal to 100%

In the second driving mode, as $SOC_{2a}$ is set at a value equal to or greater than 0% and less than $SOC_{1a}$, the proportion of use or a proportion of capacity exhibition of the silicon-based active material may be increased. That is, when a sudden stop, high-speed flight, emergency landing, or the like, is required due to the abnormal operating situation of the means of transportation, through the second driving mode, high power and high energy may be produced, and in particular, together with high output required for emergency landing, generation of capacity to the distance required for landing may be possible.

More specifically, the $SOC_{2a}$ may be a value set by the following Equation 2.

$$[\text{Equation 2}]$$

$$0 \le SOC_{2a} < \{(C_{Si})/(C_{Si} + C_{Carbon})\} \times 100$$

In Equation 2, $C_{Si}$ and $C_{Carbon}$ are as defined in Equation 1.

More specifically, the $SOC_{2a}$ may be a value set from 0% to 5%, for example, 0%. The $SOC_{1b}$ may be a value set from 90% to 100%, for example, 100%. When within the range, the capacity exhibition and output production of the silicon-based active material in the emergency situation may be easily achieved.

In the second driving mode, the secondary battery may be charged and discharged for one cycle or more so that the remaining capacity of the negative electrode is in the range of $SOC_{2a}$ to $SOC_{2b}$. When the number of charge/discharge cycles of the secondary battery is 2 or more, $SOC_{2a}$ and $SOC_{2b}$ in each cycle may be the same or different as long as the conditions described above are satisfied.

A C-rate in the first driving mode and the second driving mode may be independently 0.1C to 2C, specifically 0.5C to 1.5C, and more specifically 0.8C to 1.2C.

The means of transportation is not particularly limited as long as it uses a battery as a power source, such as a vehicle, train, monorail, ship, bike, spacecraft, and/or air mobility. Specifically, the means of transportation may be air mobility. More specifically, the air mobility may be urban air mobility (UAM). The battery system according to the present invention may be particularly preferably applied to urban air mobility that has to periodically take off, fly, and land on a set route.

Furthermore, the present invention provides means of transportation including the battery system for means of transportation as described above.

## Control method of battery system for means of transportation

In addition, the present invention provides a control method of a battery system for means of transportation. Specifically, the control method of the battery system for means of transportation may be the control method of the battery system for means of transportation.

Specifically, a control method of a battery system for means of transportation according to the present invention includes providing the battery system including a secondary battery and a battery management system including a diagnostic unit and a control unit, diagnosing a normal operating situation or an abnormal operating situation of the means of transportation in the diagnostic unit, and charging and discharging the secondary battery in a first driving mode through the control unit when the diagnostic unit diagnoses the normal operating situation, and charging and discharging the secondary battery in a second driving mode through the control unit when the diagnostic unit diagnoses the abnormal operating situation, in which the secondary battery includes a positive electrode including a positive electrode active material, a negative electrode including a negative electrode active material, a separator, and an electrolyte, the negative electrode active material includes a silicon-based active material and a carbon-based active material, in the first driving mode, the battery system is controlled to charge and discharge the secondary battery for one cycle or more in a first driving voltage range $V_{1a}$ to $V_{1b}$, in the first driving voltage range, an upper limit $V_{1b}$ is a value determined from 4.1 V to 4.6 V, and a lower limit $V_{1a}$ is a value determined from 2.8 V or more to less than $V_{1b}$, in the second driving mode, the battery system is controlled to charge and discharge the secondary battery for one cycle or more in a second driving voltage range $V_{2a}$ to $V_{2b}$, and in the second driving voltage range, an upper limit $V_{2b}$ is a value determined from 4.1 V to 4.6 V, and a lower limit $V_{2a}$ is a value determined below 2.8 V.

The method of controlling the battery system for means of transportation according to the present invention is desirable in that it may have high life performance during periodic operation (e.g., flight), and at the same time, produce high output for a sudden stop, emergency landing, or the like, in an emergency situation for a long period of time.

In the control method of the battery system for means of transportation, the battery system, the secondary battery and the battery management system included therein, and the diagnostic unit and control unit of the battery management system are as described above.

Hereinafter, the present invention will be described more specifically through specific examples. However, the following examples are only examples to help understand the present invention and do not limit the scope of the present invention. It will be apparent to those skilled in the art that various changes and modifications are possible within the scope and technical idea of the present disclosure, and it is natural that such modifications and variations fall within the scope of the appended claims.

**Examples and Comparative Examples**

**Example 1**

1. Manufacturing of secondary battery

(1) Positive electrode

Li[Ni$_{0.8}$Co$_{0.1}$Mn$_{0.1}$]O$_2$ was prepared as a positive electrode active material. The positive electrode active material was in a single particle form or quasi-single particle form and had an average particle diameter D$_{50}$ of 5 μm.

The positive electrode active material, carbon nanotubes as a conductive material, and polyvinylidene fluoride (PVdF) as a binder were added to N-methyl-2-pyrrolidone (NMP) as a solvent for forming a positive electrode slurry in a weight ratio of 97:1:2 to prepare a positive electrode slurry.

The positive electrode slurry was rolled (roll pressed) onto an aluminum current collector as a positive electrode current collector and dried in a vacuum oven at 130°C for 10 hours to form a positive electrode active material layer, thereby manufacturing a positive electrode.

(2) Manufacturing of negative electrode

A silicon-carbon composite was prepared as a silicon-based active material and graphite was prepared as a carbon-based active material. A negative electrode active material was manufactured by mixing the silicon-carbon composite as the silicon-based active material and the graphite as the carbon-based active material in a weight ratio of 6:94.

The negative electrode active material, styrene butadiene rubber (SBR) as a negative electrode binder, carboxymethyl cellulose (CMC) as a thickener, and carbon black as a negative electrode conductive material were mixed in a weight ratio of 96:2:1:1, and added to water as a solvent to prepare a negative electrode slurry.

The negative electrode slurry prepared as described above was applied to copper foil (thickness: 8 μm) as a negative electrode current collector, rolled (roll pressed), and dried in a vacuum oven at 130°C for 10 hours to form a negative electrode active material layer (thickness: μm), thereby manufacturing a negative electrode.

(3) Manufacturing of secondary battery

A polyethylene separator was interposed between the negative electrode and the positive electrode manufactured as described above, and an electrolyte was injected to manufacture a secondary battery of Example 1. The electrolyte obtained by adding LiPF$_6$ as a lithium salt at a concentration of 1.0 mol/L to an organic solvent obtained by mixing ethylene carbonate (EC) and ethyl methyl carbonate (EMC) in a volume ratio of 30:70 was used.

2. Manufacturing of battery system

A battery system including the secondary battery and a battery management system was manufactured.

The battery management system includes the diagnostic unit and the control unit that have been described.

(1) Setting of first driving mode

V$_{1a}$ was set to 2.8 V, V$_{1b}$ was set to 4.2 V, and the secondary battery was set to be charged and discharged for one cycle or more at 2.8 V to 4.2 V.

(2) Setting of second driving mode

$V_{2a}$ was set to 2.5 V, $V_{2b}$ was set to 4.2 V, and the secondary battery was set to be charged and discharged for one cycle or more at 2.5 V to 4.2 V.

(3) In the battery management system, the diagnostic unit may diagnose the normal operating situation and abnormal operating situation of the battery system, the control unit controls the battery system in the first driving mode when the diagnostic unit diagnoses the normal operating state, and the control unit controls the battery system in the second driving mode when the diagnostic unit diagnoses the abnormal operating situation.

**Example 2**

1. Manufacturing of secondary battery

A secondary battery was manufactured in the same manner as in Example 1, except that the negative electrode active material was manufactured by mixing the silicon-based active material and the carbon-based active material in a weight ratio of 12:88.

2. Manufacturing of battery system

A battery system was manufactured in the same manner as in Example 1, except that the secondary battery was used.

**Comparative Example 1**

1. Manufacturing of secondary battery

A secondary battery was manufactured using the same method as in Example 1.

2. Manufacturing of battery system

A battery system was manufactured in the same manner as in Example 1, except that the first driving mode and the second driving mode were set as follows.

(1) Setting of first driving mode

$V_{1a}$ was set to 2.8 V, $V_{1b}$ was set to 4.2 V, and the secondary battery was set to be charged and discharged for one cycle or more at 2.8 V to 4.2 V.

(2) Setting of second driving mode

$V_{2a}$ was set to 2.8 V, $V_{2b}$ was set to 4.2 V, and the secondary battery was set to be charged and discharged for one cycle or more at 2.8 V to 4.2 V.

**Comparative Example 2**

1. Manufacturing of secondary battery

A secondary battery was manufactured using the same method as in Example 2.

2. Manufacturing of battery system

A battery system was manufactured in the same manner as in Example 1, except that the first driving mode and the second driving mode were set as follows.

(1) Setting of first driving mode

$V_{1a}$ was set to 2.8 V, $V_{1b}$ was set to 4.2 V, and the secondary battery was set to be charged and discharged for one cycle or more at 2.8 V to 4.2 V.

(2) Setting of second driving mode

$V_{2a}$ was set to 2.8 V, $V_{2b}$ was set to 4.2 V, and the secondary battery was set to be charged and discharged for one cycle or more at 2.8 V to 4.2 V.

**Comparative Example 3**

1. Manufacturing of secondary battery

(1) Manufacturing of positive electrode

A positive electrode was manufactured in the same manner as in Example 1.

(2) Manufacturing of negative electrode

A negative electrode was manufactured in the same manner as in Example 1, except that only a carbon-based active material was used as the negative electrode active material without using a silicon-based active material.
A secondary battery was manufactured in the same manner as in Example 1, except that the positive and negative electrodes were used.

2. Manufacturing of battery system

A battery system was manufactured in the same manner as in Example 1, except that the secondary battery was used. That is, in Comparative Example 3 and Example 1, the first driving mode and the second driving mode were set to be the same.

**Comparative Example 4**

A battery system was manufactured in the same manner as in Comparative Example 3, except that the first driving mode and the second driving mode were set as follows.

(1) Setting of first driving mode

$V_{1a}$ was set to 2.8 V, $V_{1b}$ was set to 4.2 V, and the secondary battery was set to be charged and discharged for one cycle or more at 2.8 V to 4.2 V.

(2) Setting of second driving mode

$V_{2a}$ was set to 2.8 V, $V_{2b}$ was set to 4.2 V, and the secondary battery was set to be charged and discharged for one cycle or more at 2.8 V to 4.2 V.

[Table 1]

| | Weight percentage of silicon-based active material (weight %, based on total weight of negative electrode active material) | First driving mode | | Second driving mode | |
|---|---|---|---|---|---|
| | | $V_{1a}$ | $V_{1b}$ | $V_{2a}$ | $V_{2b}$ |
| Example 1 | 6 wt% | 2.8 | 4.2 | 2.5 | 4.2 |
| Comparative Example 1 | | 2.8 | 4.2 | 2.8 | 4.2 |
| Example 2 | 12 wt% | 2.8 | 4.2 | 2.5 | 4.2 |
| Comparative Example 2 | | 2.8 | 4.2 | 2.8 | 4.2 |
| Comparative Example 3 | 0 wt% | 2.8 | 4.2 | 2.5 | 4.2 |
| Comparative Example 4 | | 2.8 | 4.2 | 2.8 | 4.2 |

**Experiment Example**

**Experiment Example 1: Energy density evaluation**

The battery systems manufactured in the examples and comparative examples were charged and discharged in a voltage range of 2.8 V to 4.2 V under conditions of 25°C and 0.33C to measure the energy density. In this case, the energy density was calculated by multiplying the discharge capacity by an average voltage and then dividing it by the unit weight of the lithium secondary battery, and the average voltage is a value obtained by dividing a curve integral of a capacity-voltage profile by the capacity.

The results are shown in Table 2 below.

**Experiment Example 2:**

After fully charging the battery systems manufactured in the examples and comparative examples, the battery systems were discharged until the state of charge (SOC) of the negative electrode became 20%, discharged at a constant power (CP) of 1100 W at 45°C, and the time (output time) taken to reach $V_{2a}$ set in the examples and comparative examples was measured.

[Table 2]

| | Weight percentage of silicon-based active material (weight %, based on total weight of negative electrode active material) | Experimen t Example 1 | Experime nt Example 2 |
|---|---|---|---|
| | | Energy density (Wh/kg) | Output time (seconds ) |
| Example 1 | 6 wt% | 295 | 28.7 |
| Comparative Example 1 | | 295 | 17.8 |
| Example 2 | 12 wt% | 280 | 42.7 |
| Comparative Example 2 | | 280 | 16.3 |
| Comparative Example 3 | 0 wt% | 271 | About 22 |
| Comparative Example 4 | | 271 | 20.3 |

Referring to Table 2, it can be seen that the battery systems of Examples 1 and 2 not only have higher energy densities, but also have significant increases in the time for generating output in the second driving mode, compared to Comparative Examples 1 to 4.

Specifically, when comparing the battery systems of Example 1 and Comparative Example 1 and the battery systems of Example 2 and Comparative Example 2, it can be seen that in the battery system according to the present invention, the effect of improving the output time according to the adjustment of the lower limit of the driving voltage in the second driving mode is improved to a significant level.

Meanwhile, referring to experimental results of the battery systems of Comparative Examples 3 and 4, not only the energy densities are low since no silicon-based active material is used, but also the effect of increasing the output time according to the adjustment of the lower limit of the driving voltage in the second driving mode is not particularly observed. In addition, it can be seen that the battery systems of Comparative Examples 3 and 4 have shorter output times than those of Examples 1 and 2, making it difficult to cope with an emergency situation of means of transportation.

**Claims**

1. A battery system for means of transportation, comprising:

a secondary battery; and
a battery management system,
wherein the secondary battery includes a positive electrode including a positive electrode active material, a negative electrode including a negative electrode active material, a separator, and an electrolyte,
the negative electrode active material includes a silicon-based active material and a carbon-based active material,
the battery management system includes a diagnostic unit and a control unit,
the diagnostic unit diagnoses a normal operating situation or an abnormal operating situation of the means of transportation,

the control unit controls the battery system to charge and discharge the secondary battery in a first driving mode when the diagnostic unit diagnoses the normal operating situation, and to charge and discharge the secondary battery in a second driving mode when the diagnostic unit diagnoses the abnormal operating situation,

in the first driving mode, the battery system is controlled to charge and discharge the secondary battery for one cycle or more in a first driving voltage range $V_{1a}$ to $V_{1b}$,

in the first driving voltage range, an upper limit $V_{1b}$ is a value determined from 4.1 V to 4.6 V, and a lower limit $V_{1a}$ is a value determined from 2.8 V or more to less than $V_{1b}$,

in the second driving mode, the battery system is controlled to charge and discharge the secondary battery for one cycle or more in a second driving voltage range $V_{2a}$ to $V_{2b}$, and

in the second driving voltage range, an upper limit $V_{2b}$ is a value determined from 4.1 V to 4.6 V, and a lower limit $V_{2a}$ is a value determined below 2.8 V.

2. The battery system for means of transportation of claim 1, wherein the silicon-based active material includes at least one silicon-based core particle selected from the group consisting of silicon (Si), silicon oxide ($SiO_x$, $0 < x < 2$), silicon-carbon composite, and silicon-metal alloy.

3. The battery system for means of transportation of claim 2, wherein the silicon-based core particle consists of the silicon-carbon composite.

4. The battery system for means of transportation of claim 2, wherein the silicon-based active material further includes a carbon coating layer disposed on the silicon-based core particle.

5. The battery system for means of transportation of claim 1, wherein the carbon-based active material includes at least one selected from the group consisting of graphite, hard carbon, soft carbon, carbon black, graphene, and fibrous carbon.

6. The battery system for means of transportation of claim 1, wherein a weight ratio of the silicon-based active material and the carbon-based active material is 1:99 to 40:60.

7. The battery system for means of transportation of claim 1, wherein the positive electrode active material includes lithium nickel-based oxide.

8. The battery system for means of transportation of claim 7, wherein the lithium nickel-based oxide is a compound represented by the following Chemical Formula 1:

[Chemical Formula 1] $\quad\quad Li_{a1}Ni_{b1}CO_{c1}M^1_{d1}M^2_{e1}O_2$

in the Chemical Formula 1, $M^1$ is Mn, Al, or a combination thereof, $M^2$ is at least one selected from the group consisting of Zr, W, Y, Ba, Ca, Ti, Mg, Ta, and Nb, a1, b1, c1, d1, and e1 are each independently atomic fractions of elements and $0.8 \leq a1 \leq 1.3$, $0.8 \leq b1 < 1$, $0 < c1 < 0.2$, $0 < d1 < 0.2$, $0 \leq e1 \leq 0.1$, and $b1 + c1 + d1 + e1 = 1$.

9. The battery system for means of transportation of claim 7, wherein the lithium nickel-based oxide is in the form of at least one of a single particle consisting of one nodule and a quasi-single particle which is a composite of 30 or fewer nodules.

10. The battery system for means of transportation of claim 1, wherein $V_{1a}$ is a value set from 2.8 V to 3.0 V.

11. The battery system for means of transportation of claim 1, wherein $V_{2a}$ is a value set from 2.4 V to 2.7 V.

12. The battery system for means of transportation of claim 1, wherein a ratio of $V_{2a}$ to $V_{1a}$ is 0.9 or less.

13. A control method of a battery system for means of transportation, comprising:

providing the battery system including a secondary battery and a battery management system including a diagnostic unit and a control unit;
diagnosing a normal operating situation or an abnormal operating situation of the means of transportation in the diagnostic unit; and

charging and discharging the secondary battery in a first driving mode through the control unit when the diagnostic unit diagnoses the normal operating situation, and charging and discharging the secondary battery in a second driving mode through the control unit when the diagnostic unit diagnoses the abnormal operating situation,

wherein the secondary battery includes a positive electrode including a positive electrode active material, a negative electrode including a negative electrode active material, a separator, and an electrolyte,

the negative electrode active material includes a silicon-based active material and a carbon-based active material,

in the first driving mode, the battery system is controlled to charge and discharge the secondary battery for one cycle or more in a first driving voltage range $V_{1a}$ to $V_{1b}$,

in the first driving voltage range, an upper limit $V_{1b}$ is a value determined from 4.1 V to 4.6 V, and a lower limit $V_{1a}$ is a value determined from 2.8 V or more to less than $V_{1b}$,

in the second driving mode, the battery system is controlled to charge and discharge the secondary battery for one cycle or more in a second driving voltage range $V_{2a}$ to $V_{2b}$, and

in the second driving voltage range, an upper limit $V_{2b}$ is a value determined from 4.1 V to 4.6 V, and a lower limit $V_{2a}$ is a value determined below 2.8 V.

## INTERNATIONAL SEARCH REPORT

| | International application No. |
|---|---|
| | **PCT/KR2024/097187** |

**A. CLASSIFICATION OF SUBJECT MATTER**

**B64D 31/16**(2024.01)i; **B64D 27/357**(2024.01)i; **B64D 27/34**(2024.01)i; **H02J 7/00**(2006.01)i; **B60L 58/10**(2019.01)i; **H01M 4/38**(2006.01)i; **H01M 4/587**(2010.01)i; **H01M 4/36**(2006.01)i; **H01M 4/525**(2010.01)i; **H01M 4/505**(2010.01)i

According to International Patent Classification (IPC) or to both national classification and IPC

**B. FIELDS SEARCHED**

Minimum documentation searched (classification system followed by classification symbols)

B64D 31/16(2024.01); B60R 16/02(2006.01); G01R 31/34(2006.01); G01R 31/36(2006.01); H01M 10/052(2010.01); H01M 10/0569(2010.01); H02J 7/04(2006.01); H02J 7/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 제어(control), 충전(charge), 전압(voltage), 모드(mode)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2014-0087995 A (MAROOMCS CO., LTD.) 09 July 2014 (2014-07-09)<br>See paragraphs [0024]-[0079] and figure 1. | 1-13 |
| Y | KR 10-2020-0042319 A (SAMSUNG ELECTRONICS CO., LTD. et al.) 23 April 2020 (2020-04-23)<br>See paragraphs [0066]-[0110], [0132] and [0135], claim 1, and figure 1. | 1-13 |
| A | KR 10-2015-0020958 A (SAMSUNG SDI CO., LTD.) 27 February 2015 (2015-02-27)<br>See paragraph [0070] and figure 2. | 1-13 |
| A | JP 2018-122737 A (SUZUKI MOTOR CORP.) 09 August 2018 (2018-08-09)<br>See paragraphs [0010]-[0014] and figure 1. | 1-13 |
| A | US 2002-0084768 A1 (YOUN, Kil-Young) 04 July 2002 (2002-07-04)<br>See claim 1. | 1-13 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 March 2025** | **18 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/097187**

| Patent document cited in search report | | | Publication date (day/month/year) | Patent family member(s) | | | Publication date (day/month/year) |
|---|---|---|---|---|---|---|---|
| KR | 10-2014-0087995 | A | 09 July 2014 | CN | 105683770 | A | 15 June 2016 |
| | | | | EP | 3059599 | A1 | 24 August 2016 |
| | | | | JP | 2017-500835 | A | 05 January 2017 |
| | | | | KR | 10-1539352 | B1 | 27 July 2015 |
| | | | | KR | 10-2014-0087994 | A | 09 July 2014 |
| | | | | US | 2016-0266210 | A1 | 15 September 2016 |
| | | | | WO | 2015-056830 | A1 | 23 April 2015 |
| KR | 10-2020-0042319 | A | 23 April 2020 | KR | 10-2702589 | B1 | 04 September 2024 |
| | | | | US | 11637323 | B2 | 25 April 2023 |
| | | | | US | 2020-0119403 | A1 | 16 April 2020 |
| KR | 10-2015-0020958 | A | 27 February 2015 | KR | 10-1893957 | B1 | 31 August 2018 |
| | | | | US | 2015-0048797 | A1 | 19 February 2015 |
| | | | | US | 9395417 | B2 | 19 July 2016 |
| JP | 2018-122737 | A | 09 August 2018 | None | | | |
| US | 2002-0084768 | A1 | 04 July 2002 | JP | 2002-315112 | A | 25 October 2002 |
| | | | | JP | 3682479 | B2 | 10 August 2005 |
| | | | | KR | 10-0387483 | B1 | 18 June 2003 |
| | | | | KR | 10-2002-0058816 | A | 12 July 2002 |
| | | | | US | 6710575 | B2 | 23 March 2004 |

Form PCT/ISA/210 (patent family annex) (July 2022)